# FASCICULE DE BREVET EUROPEEN

(11) **EP 1 851 983 B1**
(45) Date de publication et mention de la délivrance du brevet: **22.08.2018**
(21) Numéro de dépôt: 06743198.1
(22) Date de dépôt: 22.02.2006
(51) Int. Cl.: H04W 8/24, H04W 8/18

(54) **DISPOSITIF DE RADIOCOMMUNICATION ET SYSTEME DE RADIOCOMMUNICATION COMPORTANT UN TEL DISPOSITIF**
FUNKKOMMUNIKATIONSGERÄT UND FUNKKOMMUNIKATIONSSYSTEM DAMIT
RADIO COMMUNICATION DEVICE AND RADIO COMMUNICATION SYSTEM COMPRISING SAME

(30) Priorité: 25.02.2005 FR 0501954
(43) Date de publication de la demande: 07.11.2007
(73) Titulaire: Thomson Licensing, 92130 Issy-les-Moulineaux (FR)
(72) Inventeur: CARREEL, Eric, F-92190 Meudon (FR); ROYER DE LA BASTIE, Sébastien, F-75007 Paris (FR); MOUICHE, Arnaud, F-75012 Paris (FR)
(74) Mandataire: de la Fouchardière, Marie-Noëlle
(86) Numéro de dépôt international: PCT/EP2006/060165
(87) Numéro de publication internationale: WO 2006/089902

(56) Documents cités:
- EP-A- 0 459 344
- EP-A- 1 211 821
- US-B1- 6 349 204
- US-B1- 6 378 069
- US-B1- 6 622 017

## Description

### DOMAINE TECHNIQUE

La présente invention est relative aux dispositifs de radiocommunication et aux systèmes de radiocommunication comportant de tels dispositifs.

### ART ANTERIEUR

L'art antérieur connait, par le brevet américain US 6 349 204 (British Télécommunications), un procédé de communication entre un téléphone mobile et une station de base. Le procédé comporte une première étape d'interrogation au cours de laquelle la station de base transmet un signal relatif à un mode de fonctionnement préféré et le téléphone mobile renvoie un signal indiquant si sa mémoire contient ou non des données de programme correspondant à ce mode préféré de fonctionnement. Le cas échéant, la station de base transmet les données de programme en question. La station de base et le téléphone mobile fonctionnent ensuite dans ce mode. Dans le cas où le téléphone ne possède pas de mémoire suffisante, le processus est répété jusqu'à ce qu'un programme approprie soit identifié. Dans cette demande de brevet américain, le téléphone ne comporte pas de module de démarrage adapté pour permettre une liaison radio simplifiée avec un réseau de radiocommunication au sens de la présente invention. Le procédé de communication de cette demande de brevet américain vise à permettre d'utiliser le meilleur mode de fonctionnement possible entre la station de base et le téléphone, ce qui est différent de l'objectif de la présente invention.

L'art antérieur connait également, par le brevet américain US 6 622 617 (Cellco Partnership), un procédé permettant d'ajouter de nouvelles fonctionnalités à un terminal mobile. Des modules plug-in sont téléchargés dans la mémoire du terminal. Dans cette demande de brevet américain, le téléphone ne comporte pas de module de démarrage adapte pour permettre une liaison radio simplifiée avec un réseau de radiocommunication au sens de la présente invention.

On connait également dans l'état de la technique, par la demande de brevet européen EP 0 459 344 (Alcatel), un dispositif de téléchargement de logiciel pour un terminal mobile. Dans cette demande de brevet européen, le téléchargement s'effectue par le réseau de radiocommunication classique ou bien par un réseau RNIS, mais en aucun cas par une liaison radio simplifiée.

Au vu de l'état de la technique et notamment du brevet américain US 6 349 204, le problème qui se pose est de mettre à jour aisément le module d'utilisation du dispositif de radiocommunication.

### RESUME

L'invention concerne un dispositif de radiocommunication tel que revendiqué en revendication 1, un système de radiocommunication tel que revendiqué en revendication 12, ainsi qu'un procédé de communication tel que revendiqué en revendication 20. Des modes de mises en oeuvre particuliers sont revendiqués dans les revendications dépendantes.

Grâce à ces dispositions, on peut télécharger des mises à jour du module d'utilisation par voie radio, sans avoir besoin de maintenir en fonctionnement ce module d'utilisation pendant cette mise à jour. Il en résulte une grande facilité de mise à jour et, le cas échéant un gain de mémoire puisque la mise à jour du module d'utilisation peut simplement effacer tout ou partie de la version précédente de ce module pendant le téléchargement.

Tout mode de réalisation décrit ci-dessous, qui ne serait pas défini dans les revendications, est considéré comme exemple ne faisant pas partie de l'invention. Concernant le dispositif de radiocommunication :
- le module de démarrage est adapté pour stocker la mise à jour à la place d'au moins une partie du module d'utilisation initialement contenu dans la mémoire ;
- le module de démarrage est adapté pour recevoir et reconnaitre des instructions par ladite liaison radio simplifiée ;
- le module de démarrage est adapté pour recevoir par ladite liaison radio simplifiée, une instruction d'écriture dans la mémoire pour y stocker ladite mise à jour ;
- le module de démarrage est adapté pour recevoir par ladite liaison radio simplifiée, une instruction d'effacement d'au moins une partie de la mémoire ;
- la mémoire du dispositif de radiocommunication comprend une mémoire flash contenant le module d'utilisation ;
- le module de démarrage est adapté pour :
   - recevoir par ladite liaison radio simplifiée, une interrogation demandant des informations sur le contenu de la mémoire,
   - rechercher lesdites informations et émettre par ladite liaison radio simplifiée, une réponse donnant ces informations ;
- le module de démarrage est adapté pour vérifier l'intégrité de la mise à jour téléchargée ;
- le module de démarrage présente un mode de fonctionnement normal entrainant une exécution du module d'utilisation et un mode de téléchargement permettant le téléchargement d'une mise à jour du module d'utilisation et n'entrainant pas d'exécution immédiate du module d'utilisation, ledit module de démarrage étant adapté pour recevoir par ladite liaison radio simplifiée, une instruction de passage en mode de fonctionnement normal ;
- le module d'utilisation est adapté pour donner au module de démarrage une instruction de passage en mode de fonctionnement normal ;
- le dispositif de radiocommunication est un téléphone sans fil ;
- le protocole de radiocommunication est choisi parmi les protocoles "BLUETOOTH", "Wi-Fi", "DECT".

Concernant le système de radiocommunication :
- la base est adaptée pour envoyer au module de démarrage des instructions par ladite liaison radio simplifiée ;
- la base est adaptée pour envoyer au module de démarrage par ladite liaison radio simplifiée, une instruction d'écriture dans la mémoire du dispositif de radiocommunication pour y stocker ladite mise à jour ;
- la base est adaptée pour faire stocker ladite mise à jour au moins partiellement a la place de la version préexistante du module d'utilisation ;
- la base est adaptée pour envoyer au module de démarrage par ladite liaison radio simplifiée, une instruction d'effacement d'au moins une partie de la mémoire du dispositif de radiocommunication ;
- la base est adaptée pour envoyer au module de démarrage, une interrogation demandant des informations sur le contenu de la mémoire du dispositif de radiocommunication, et le module de démarrage est adapté pour, suite à cette interrogation, rechercher lesdites informations et émettre par ladite liaison radio simplifiée, une réponse donnant ces informations.

### LISTE DES FIGURES

D'autres caractéristiques et avantages de l'invention apparaitront au cours de la description suivante d'un de ses modes de réalisation, donné à titre d'exemple non limitatif, en regard des dessins joints.

Sur les dessins :
- la figure 1, est un schéma de principe d'un système de radiocommunication selon une forme de réalisation de l'invention,
- et la figure 2 est un schéma bloc montrant une partie du système de la figure 1.

### DESCRIPTION DETAILLEE

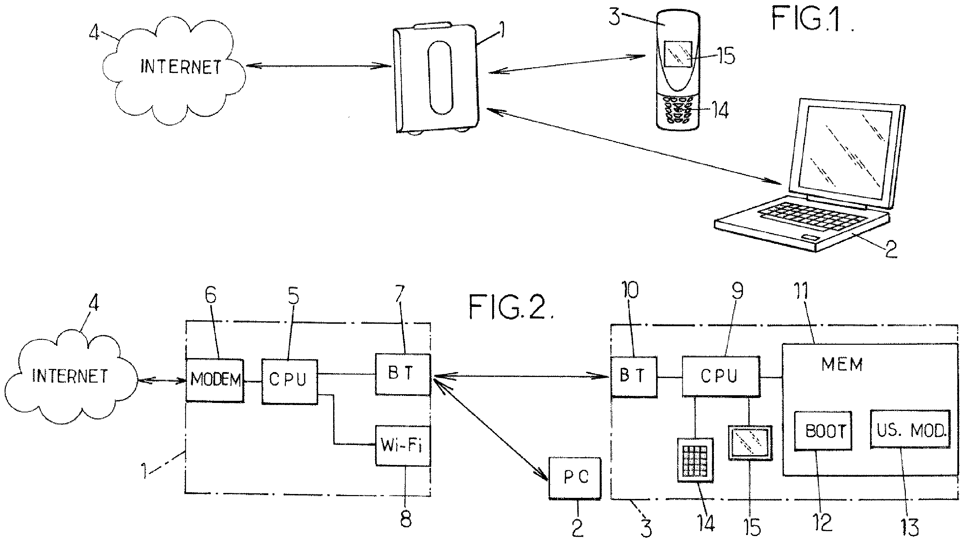

Sur les différentes figures, les mêmes références désignent des éléments identiques ou similaires. Comme représenté sur la figure 1, l'invention concerne un système local de radiocommunication qui peut comprendre par exemple une base 1, adaptée pour communiquer selon plusieurs protocoles avec différentes entités telles qu'un micro-ordinateur 2, un radiotéléphone 3, le réseau internet 4, etc.

La communication entre la base 1, et certaines de ces entités constituées par des dispositifs de radiocommunication ou terminaux (notamment le micro-ordinateur 2 et le téléphone sans fil 3), peut s'effectuer par voie radio, selon une norme de radiocommunication locale telle que la norme "BLUETOOTH", ou encore la norme "Wi-Fi" (norme IEEE 802.11b, ou éventuellement IEEE 802.11a. ou g), ou encore la norme DECT.

Par ailleurs, la base 1, communique aussi avec le
réseau internet (protocole TCP/IP), notamment par une liaison "ADSL", ou éventuellement par un modem V32, V32bis, V34, V90, V92 ou autre.

Comme représenté plus en détail sur la figure 2, la base 1 peut comporter par exemple une unité de traitement 5 (CPU) qui peut communiquer notamment avec :
- un modem 6, par exemple un modem ADSL dans l'exemple considéré, permettant la communication avec le réseau Internet 4,
- un circuit radio "BLUETOOTH" 7 (BT) qui permet, dans l'exemple considéré ici, de communiquer avec l'ordinateur 2 (PC) et le téléphone sans fil 3 en formant un réseau radio local communiquant selon le protocole "BLUETOOTH",
- et le cas échéant un circuit radio "Wi-Fi" 8 permettant de communiquer avec d'autres terminaux (micro-ordinateurs ou autre) en formant un deuxième réseau radio local communiquant selon le protocole "Wi-Fi".

Bien entendu, comme expliqué précédemment, les liaisons ADSL, "BLUETOOTH" et "Wi-Fi" susmentionnées ne sont données qu'à titre d'exemples et d'autres types de liaisons pourraient être utilisées.

Par ailleurs, le téléphone sans fil 3 peut comporter par exemple une unité de traitement électronique 9 (CPU) qui communique avec :
- un circuit radio "BLUETOOTH" (10) (ou tout autre protocole de liaison radio compatible avec les liaisons radio disponibles sur la base 1) adapté pour communiquer avec le circuit radio "BLUETOOTH" (7) de la base 1,
- une mémoire 11 (par exemple une mémoire flash) contenant notamment un module logiciel de démarrage 12 (BOOT) et un module logiciel d'utilisation 13 (US. MOD.),
- un clavier 14,
- et un écran 15

De façon connue en soi, le module de démarrage 12 s'exécute automatiquement sur l'unité de traitement 9 lors de chaque mise en fonctionnement du téléphone sans fil 3.

En mode de fonctionnement normal du téléphone sans fil 3, le module de démarrage 12 vérifie alors que le module d'utilisation 13 contenu dans la mémoire 11 est intègre et dans l'affirmative, il charge ce module d'utilisation dans l'unité de traitement 9, ce qui permet le fonctionnement du téléphone sans fil 3 avec toutes ses fonctionnalités (utilisation d'un protocole "BLUETOOTH" étendu, fonctionnement complet des interfaces utilisateur au moyen de l'écran 15 et du clavier 14, fonctionnement complet des services de téléphonie et des services annexes, etc.).

A titre d'exemple, la liaison radio normale peut mettre en oeuvre un protocole "BLUETOOTH" étendu comprenant les couches suivantes :
- couche dite "LC" (contrôle temps réel du lien radio) :
   - gestion temps réel de la radio,
   - multiplexage temporel données / audio / page / requête
   - AFH (adaptation du sélecteur de fréquences) ;
- couche dite "LM" (gestion et négociation du lien radio) :
   - négociation des connexions entrantes et sortantes,
   - authentification, contrôle du cryptage,
   - négociation pour l'ouverture des canaux audio,
   - contrôle de puissance,
   - recherche de périphérique, service de réponses aux recherches de périphériques,
- couche dite "L2CAP" :
   - contrôle / signalisation pour l'ouverture de liens inter-services,
   - multiplexage des liens de données entre les différents services.

Si, lors d'une mise en fonctionnement du téléphone sans fil 3, le module de démarrage 12 détecte une corruption du module d'utilisation 13, ledit module de démarrage 12 passe automatiquement dans un mode de téléchargement qui sera décrit ci-après, pour remettre à jour le module d'utilisation 13.

Par ailleurs, lorsque la base 1 reçoit (par exemple par Internet) une mise à jour du module d'utilisation 13, elle peut le signaler au module d'utilisation 13 en cours de fonctionnement. Dans ce cas, le module d'utilisation 13 lance l'exécution du module de démarrage 12 en mode de téléchargement, puis la base 1 coupe la liaison BLUETOOTH existante et relance une liaison radio BLUETTOTH, de sorte que le module de démarrage 12 redémarre en mode de téléchargement.

Lorsque le module de démarrage 12 est exécuté sur l'unité de traitement 9 en mode de téléchargement, ledit module de démarrage 12 ne lance pas l'exécution du module d'utilisation 13, mais au contraire établit une liaison radio simplifiée (BLUETOOTH dans l'exemple considéré ici) et attend les instructions de la base 1.

Cette liaison radio simplifiée permet d'échanger certains messages prédéterminés avec la base 1 notamment pour en recevoir des instructions et télécharger une mise à jour complète ou partielle du module d'utilisation 13 (cette mise à jour peut être une version nouvelle du module d'utilisation 13 ou simplement la version préexistante de ce module, que l'on souhaite recharger sur le téléphone sans fil 3 à partir de la base 1 si le module de démarrage 12 a détecté une corruption du module d'utilisation 13.

Ainsi, la liaison radio simplifiée, contrairement à la liaison radio qui s'établit en mode de fonctionnement normal, ne permet pas de mettre en oeuvre un service de téléphonie ni d'autres services à part un service de téléchargement. Cette liaison radio simplifiée peut mettre en oeuvre un protocole "BLUETOOTH" réduit comprenant les couches suivantes :
- couche dite "LC" (contrôle temps réel du lien radio) : limitée au multiplexage simple des données pour la création de connexions,
- couche dite "LM" (contrôle temps réel du lien radio) : limitée à une négociation restreinte aux connexions entrantes, sans audio, sans authentification ni cryptage,
- couche dite "L2CAP" : contrôle, signalisation et multiplexage limités à un mono-service,
- couche de services : service de téléchargement.

Dans la liaison radio simplifiée qui s'établit entre la base 1 et le téléphone sans fil 3, la base est maître et le téléphone esclave.

Dans un premier temps, la base peut envoyer au téléphone, par la liaison radio simplifiée, une instruction d'initialisation (BTF_INIT), sans laquelle le module de démarrage 12 du téléphone n'accepte aucune autre instruction. Le module de démarrage 12 renvoie alors à la base 1 un code aléatoire d'authentification, par exemple sur 16 octets, accompagné d'un code indiquant si un processus d'authentification est requis. Si tel est le cas, la base 1 envoie au téléphone un message d'authentification (BTF_SRES) fonction dudit code aléatoire d'authentification, message auquel répond le module de démarrage 12 pour indiquer si l'authentification a réussi.

Si tel est le cas, la base 1 envoie au téléphone 3, par la liaison radio simplifiée, une interrogation (BTF_GET_FLASH_INFO) visant à décrire la mémoire 11. Le module de démarrage 12 répond à cette interrogation en donnant notamment le nombre de secteurs (codé sur 2 octets) utilisé par le module d'utilisation dans la mémoire 11, la taille des secteurs (codée sur 4 octets) et une taille de page mémoire (sur 4 octets).

La base 1 envoie ensuite par la liaison radio simplifiée, pour chaque registre de la mémoire 11, une instruction de lecture (BTF_REG_READ) de ce registre en précisant son adresse (codée sur 4 octets) et sa longueur (codée sur 1 octet). En réponse à chacune de ces instructions, le module de démarrage 12 envoie à la base 1 le contenu du registre spécifié, codé par exemple sur 4 octets.

Puis la base 1 envoie au téléphone 3, pour chaque secteur de la mémoire 11 occupé par le module d'utilisation, une instruction d'effacement (BTF_FLASH_ERASE) donnant le numéro du secteur à effacer (codé sur 1 octet). Le module de démarrage exécute alors cet effacement puis rend compte à la base 1 du bon effacement du secteur voulu, par exemple par un message codé sur 1 octet.

Pour chaque secteur de la mémoire 11 précédemment effacé, la base 1 envoie alors au module de démarrage 12 une instruction de mise à jour (BTF_FLASH_WRITE) du module d'utilisation 13, chacun de ces messages donnant notamment le secteur de départ où écrire dans la mémoire 11, la longueur des données puis les données. Le module de démarrage commande l'écriture des données ainsi reçues dans les secteurs voulus, puis envoie à la base 1 un message de compte rendu indiquant si l'écriture dans la mémoire 11 s'est déroulée avec succès. Les instructions de mise à jour peuvent éventuellement concerner 512 secteurs à la fois, pour accélérer le processus de téléchargement.

La base 1 envoie alors au téléphone 3 une instruction de contrôle d'intégrité (BTF_MISR) qui peut préciser par exemple l'adresse de départ et la longueur des données à vérifier. Le module de démarrage 12 calcule ensuite par exemple une signature sur 128 bits des données enregistrées et l'envoie à la base 1 qui peut vérifier si le téléchargement s'est bien effectué. Si tel n'est pas le cas (par exemple si le téléchargement a été interrompu par une coupure électrique ou autre), la base 1 recommence le processus de téléchargement comme décrit ci-dessus.

Enfin, la base 1 donne instruction au module de démarrage, par la liaison radio simplifiée, de passer en mode de fonctionnement normal, et le module de démarrage 12 passe en mode de fonctionnement normal en renvoie à la base 1 un message d'acquit. La base 1 provoque alors une déconnexion puis un reconnexion de la liaison radio, de sorte que le module de démarrage bascule en mode de fonctionnement normal, comme expliqué ci-dessus.

Grâce aux dispositions décrites ci-dessus, la taille de la mémoire du téléphone sans fil 3 peut être minimisée, et en particulier peut être nettement inférieure à la taille mémoire du module d'utilisation, puisque le module d'utilisation 13 peut être partiellement ou totalement effacé lors du téléchargement de la mise à jour, le téléphone sans fil continuant alors à fonctionner en mode de téléchargement avec le module de démarrage 12.

## Revendications

1. Dispositif de radiocommunication (3) comprenant :
- au moins une mémoire (11) contenant un module logiciel de démarrage (12) et un module logiciel d'utilisation(13),
- au moins une unité de traitement électronique (9) reliée à la mémoire (11),
- au moins un circuit radio (10) commandé par l'unité de traitement (9),
ladite unité de traitement comprenant des moyens pour :
- exécuter ledit module de démarrage (12) en mode de téléchargement, le module de démarrage (12) comprenant des moyens pour :
• établir une liaison radio simplifiée du dispositif de radiocommunication (3) avec un réseau de radiocommunication par ledit module de démarrage (12), ladite liaison radio étant simplifiée en ce qu'elle permet uniquement un service de téléchargement à l'exclusion d'un autre service de téléphonie, ladite liaison radio simplifiée étant permise par la mise en oeuvre de fonctionnalités limitées associées à l'implémentation des couches suivantes du protocole Bluetooth :
- la couche dite "LC" (contrôle temps réel du lien radio) : limitée au multiplexage simple des données pour la création de connexions ;
- la couche dite "LM" (contrôle temps réel du lien radio) : limitée à une négociation restreinte aux connexions entrantes, sans audio, sans authentification ni cryptage ;
- la couche dite "L2CAP" : contrôle, signalisation et multiplexage limités à un mono-service ;
- la couche de services : service de téléchargement,
• télécharger une mise à jour du module d'utilisation (13) via ladite liaison radio simplifiée,
• stocker ladite mise à jour dans la mémoire (11) du dispositif de radiocommunication,
• recevoir une instruction de passage en mode de fonctionnement normal dudit module de démarrage (12),
• déconnecter ladite liaison radio simplifiée à l'issue dudit téléchargement,
ladite unité de traitement comprenant en outre des moyens pour exécuter ledit module de démarrage (12) en mode de fonctionnement normal, le mode de fonctionnement normal comprenant des moyens pour charger le module d'utilisation (13) mis à jour pour établir une liaison radio normale du dispositif de radiocommunication (3) avec le réseau de radiocommunication, ladite liaison radio étant normale en ce qu'elle permet au moins un service de téléphonie.

2. Dispositif de radiocommunication selon la revendication 1, dans lequel le module de démarrage (12) est adapté pour stocker la mise à jour à la place d'au moins une partie du module d'utilisation initialement contenu dans la mémoire (11).

3. Dispositif de radiocommunication selon l'une quelconque des revendications 1 à 2, dans lequel le module de démarrage est adapté pour recevoir et reconnaitre des instructions par ladite liaison radio simplifiée.

4. Dispositif de radiocommunication selon la revendication 3, dans lequel le module de démarrage (12) est adapté pour recevoir par ladite liaison radio simplifiée, une instruction d'écriture dans la mémoire (11) pour y stocker ladite mise à jour.

5. Dispositif de radiocommunication selon l'une quelconque des revendications 3 et 4, dans lequel le module de démarrage (12) est adapté pour recevoir par ladite liaison radio simplifiée, une instruction d'effacement d'au moins une partie de la mémoire (11).

6. Dispositif de radiocommunication selon l'une quelconque des revendications précédentes, dans lequel la mémoire (11) du dispositif de radiocommunication comprend une mémoire flash contenant le module d'utilisation (13).

7. Dispositif de radiocommunication selon l'une quelconque des revendications précédentes, dans lequel le module de démarrage (12) est adapté pour :
- recevoir par ladite liaison radio simplifiée, une interrogation demandant des informations sur le contenu de la mémoire (11),
- rechercher lesdites informations et émettre par ladite liaison radio simplifiée, une réponse donnant ces informations.

8. Dispositif de radiocommunication selon l'une quelconque des revendications précédentes, dans lequel le module de démarrage (12) est adapté pour vérifier l'intégrité de la mise à jour téléchargée.

9. Dispositif de radiocommunication selon l'une quelconque des revendications précédentes, dans lequel le mode de téléchargement permettant le téléchargement d'une mise à jour du module d'utilisation n'entraine pas d'exécution immédiate du module d'utilisation (13), ledit module de démarrage (12) étant adapté pour recevoir par ladite liaison radio simplifiée, une instruction de passage en mode de fonctionnement normal.

10. Dispositif de radiocommunication selon l'une quelconque des revendications précédentes, dans lequel le module d'utilisation (13) est adapté pour donner au module de démarrage (12) une instruction de passage en mode de fonctionnement normal.

11. Dispositif de radiocommunication selon l'une quelconque des revendications précédentes, constituant un téléphone sans fil (3).

12. Système de radiocommunication comprenant un dispositif de radiocommunication (3) selon l'une quelconque des revendications précédentes et au moins une base de radiocommunication (1) formant un réseau local avec ledit dispositif de radiocommunication et communiquant avec celui-ci selon ledit protocole de radiocommunication.

13. Système de radiocommunication selon la revendication 12, dans lequel la base (1) est adaptée pour envoyer au module de démarrage (12) des instructions par ladite liaison radio simplifiée.

14. Système de radiocommunication selon la revendication 13, dans lequel la base (1) est adaptée pour envoyer au module de démarrage (12) par ladite liaison radio simplifiée, une instruction d'écriture dans la mémoire du dispositif de radiocommunication pour y stocker ladite mise à jour.

15. Système de radiocommunication selon la revendication 14, dans lequel la base (1) est adaptée pour faire stocker ladite mise à jour au moins partiellement a la place de la version préexistante du module d'utilisation (13).

16. Système de radiocommunication selon l'une quelconque des revendications 13 à 15, dans lequel la base (1) est adaptée pour envoyer au module de démarrage (12) par ladite liaison radio simplifiée, une instruction d'effacement d'au moins une partie de la mémoire (11) du dispositif de radiocommunication.

17. Système de radiocommunication selon l'une quelconque des revendications 13 à 16, dans lequel la base (1) est adaptée pour envoyer au module de démarrage (12), une interrogation demandant des informations sur le contenu de la mémoire (11) du dispositif de radiocommunication (3),
et le module de démarrage (12) est adapté pour, suite à cette interrogation, rechercher lesdites informations et émettre par ladite liaison radio simplifiée, une réponse donnant ces informations.

18. Système de radiocommunication selon l'une quelconque des revendications 13 à 17, dans lequel le module de démarrage (12) est adapté pour envoyer à la base une information de contrôle d'intégrité de la mise à jour téléchargée, la base étant adaptée pour commander à nouveau un téléchargement de ladite mise à jour vers le dispositif de radiocommunication (3) si ladite information de contrôle d'intégrité révèle un défaut d'intégrité.

19. Système de radiocommunication selon la revendication 18, dans lequel ladite information de contrôle d'intégrité est une signature calculée à partir de ladite mise à jour stockée dans la mémoire (11) du dispositif de radiocommunication (3), la base étant adaptée pour déterminer si cette signature révèle un défaut d'intégrité et pour déclencher alors un nouveau téléchargement de la mise à jour par ladite liaison radio simplifiée.

20. Procédé de communication mettant en oeuvre au moins un dispositif de communication comportant au moins une mémoire (11) contenant un module logiciel de démarrage (12) et un module logiciel d'utilisation (13), au moins une unité de traitement électronique (9) reliée à la mémoire (11) et au moins un circuit radio (10) commandé par l'unité de traitement (9), ledit procédé comprenant les étapes de :
- exécution du module de démarrage (12) dans l'unité de traitement en mode de téléchargement, le mode de téléchargement comprenant :
• établissement d'une liaison radio simplifiée du dispositif de radiocommunication (3) avec un réseau de radiocommunication par ledit module de démarrage, ladite liaison radio étant simplifiée en ce qu'elle permet uniquement un service de téléchargement à l'exclusion d'un autre service de téléphonie, ladite liaison radio simplifiée étant permise par la mise en oeuvre de fonctionnalités limitées associées à l'implémentation des couches suivantes du protocole Bluetooth :
- la couche dite "LC" (contrôle temps réel du lien radio) : limitée au multiplexage simple des données pour la création de connexions ;
- la couche dite "LM" (contrôle temps réel du lien radio) : limitée à une négociation restreinte aux connexions entrantes, sans audio, sans authentification ni cryptage ;
- la couche dite "L2CAP" : contrôle, signalisation et multiplexage limités à un mono-service ;
- la couche de services : service de téléchargement,
• téléchargement d'une mise à jour du module d'utilisation (13) via ladite liaison radio simplifiée,
• stockage de ladite mise à jour dans la mémoire (11) du dispositif de radiocommunication,
• réception d'une instruction de passage en mode de fonctionnement normal dudit module de démarrage (12),
• déconnexion de ladite liaison radio simplifiée à l'issue dudit téléchargement,
- exécution dudit module de démarrage (12) en mode de fonctionnement normal, le mode de fonctionnement normal comprenant un chargement du module d'utilisation mis à jour pour l'établissement d'une liaison radio normale du dispositif de radiocommunication (3) avec ledit réseau de radiocommunication, ladite liaison radio étant normale en ce qu'elle permet au moins un service de téléphonie.

## Patentansprüche

1. Funkkommunikationsgerät (3), umfassend:
- mindestens einen Speicher (11), enthaltend ein Softwaremodule zum Starten (12) und ein Softwaremodul zur Benutzung (13),
- mindestens eine elektronische Verarbeitungseinheit (9), die mit dem Speicher (11) verbunden ist,
- mindestens eine Funkschaltung (10), die durch die Verarbeitungseinheit (9) gesteuert wird,
wobei die besagte Verarbeitungseinheit Mittel umfasst zum:
- Ausführen des besagten Startmoduls (12) im Download-Modus, wobei das Startmodul (12) Mittel umfasst zum:
• Herstellen einer vereinfachten Funkverbindung des Funkkommunikationsgeräts (3) mit einem Funkkommunikationsnetzwerk durch das besagte Startmodul (12), wobei die besagte Funkverbindung insofern vereinfacht ist, dass sie ausschließlich einen Download-Dienst unter Ausschluss eines anderen Telefonie-Dienstes ermöglicht, wobei die besagte vereinfachte Funkverbindung ermöglicht wird durch die Umsetzung von beschränkten Funktionalitäten, die verbunden sind mit der Implementierung der folgenden Schichten des Bluetooth-Protokolls:
- die als "LC" bezeichnete Schicht (Echtzeitregelung des Funklinks: beschränkt auf die einfache Multiplexierung der Daten für die Schaffung von Verbindungen;
- die als "LM" bezeichnete Schicht (Echtzeitregelung des Funklinks): beschränkt auf eine eingeschränkte Verhandlung zu den eingehenden Verbindungen, ohne Audio, ohne Authentifizierung noch Verschlüsselung;
- die als "L2CAP" bezeichnete Schicht: auf einen Einzeldienst beschränkte Regelung, Signalisierung und Multiplexierung;
- die Diensteschicht: Download-Dienst,
• Download eines Updates des Benutzermoduls (13) über die besagte vereinfachte Funkverbindung,
• Speicherung des besagten Updates im Speicher (11) des Funkkommunikationsgeräts,
• Empfang eines Umschaltbefehls im normalen Betriebsmodus des besagten Startmoduls (12),
• Trennung der besagten vereinfachten Funkverbindung bei Beendigung des besagten Downloads,
wobei die besagte Verarbeitungseinheit des Weiteren Mittel umfasst, um das besagte Startmodul (12) im normalen Betriebsmodus auszuführen, wobei der normale Betriebsmodus Mittel umfasst, um das upgedatete Benutzermodul (13) zu laden, um eine normale Funkverbindung des Funkkommunikationsgeräts (3) mit dem Funkkommunikationsnetzwerk herzustellen, wobei die besagte Funkverbindung insofern normal ist, dass sie mindestens einen Telefonie-Dienst ermöglicht.

2. Funkkommunikationsgerät nach Anspruch 1, in welchem das Startmodul (12) geeignet ist, um das Update anstelle von mindestens einem Teil des ursprünglich in dem Speicher (11) enthaltenen Benutzermoduls zu speichern.

3. Funkkommunikationsgerät nach einem der Ansprüche 1 bis 2, in welchem das Startmodul geeignet ist, Anweisungen über die besagte vereinfachte Funkverbindung zu empfangen und zu erkennen.

4. Funkkommunikationsgerät nach Anspruch 3, in welchem das Startmodul (12) geeignet ist, über die besagte vereinfachte Funkverbindung einen Schreibbefehl im Speicher (11) zu empfangen, um dort das besagte Update zu speichern.

5. Funkkommunikationsgerät nach einem der Ansprüche 3 und 4, in welchem das Startmodul geeignet ist, über die besagte vereinfachte Funkverbindung einen Löschbefehl von mindestens einem Teil des Speichers (11) zu empfangen.

6. Funkkommunikationsgerät nach einem der vorstehenden Ansprüche, in welchem der Speicher (11) des Funkkommunikationsgeräts einen Flash-Speicher umfasst, der das Benutzermodul (13) enthält.

7. Funkkommunikationsgerät nach einem der vorstehenden Ansprüche, in welchem das Startmodul (12) geeignet ist zum:
- Empfangen über die besagte vereinfachte Funkverbindung einer Abfrage, die Informationen über den Inhalt des Speichers (11) erbittet,
- Suchen der besagten Informationen und Senden über die besagte vereinfachte Funkverbindung einer Antwort, die diese Informationen gibt.

8. Funkkommunikationsgerät nach einem der vorstehenden Ansprüche, in welchem das Startmodul (12) geeignet ist, die Integrität des heruntergeladenen Updates zu überprüfen.

9. Funkkommunikationsgerät nach einem der vorstehenden Ansprüche, in welchem der Download-Modus, der den Download eines Updates des Benutzermoduls ermöglicht, keine unmittelbare Ausführung des Benutzermoduls (13) nach sich zieht, wobei das besagte Startmodul (12) geeignet ist, um über die besagte vereinfachte Funkverbindung einen Umschaltbefehl im normalen Funktionsmodus zu empfangen.

10. Funkkommunikationsgerät nach einem der vorstehenden Ansprüche, in welchem das Benutzermodul (13) geeignet ist, um dem Startmodul (12) einen Umschaltbefehl im normalen Funktionsmodus zu geben.

11. Funkkommunikationsgerät nach einem der vorstehenden Ansprüche, das ein drahtloses Telefon (3) darstellt.

12. Funkkommunikationssystem, umfassend ein Funkkommunikationsgerät (3) nach einem der vorstehenden Ansprüche und mindestens eine Funkkommunikationsbasis (1), die mit dem besagten Funkkommunikationsgerät ein lokales Netzwerk bildet und mit diesem nach dem besagten Funkkommunikationsprotokoll in Verbindung steht.

13. Funkkommunikationssystem nach Anspruch 12, in welchem die Basis (1) geeignet ist, um an das Startmodul (12) Befehle über die besagte vereinfachte Funkverbindung zu senden.

14. Funkkommunikationssystem nach Anspruch 13, in welchem die Basis (1) geeignet ist, um an das Startmodul (12) über die besagte vereinfachte Funkverbindung einen Schreibbefehl im Speicher des Funkkommunikationsgeräts zu senden, um dort das besagte Update zu speichern.

15. Funkkommunikationssystem nach Anspruch 14, in welchem die Basis (1) geeignet ist, um das besagte Update mindestens teilweise anstelle der vorher vorhandenen Version des Benutzermoduls (13) speichern zu lassen.

16. Funkkommunikationssystem nach einem der Ansprüche 13 bis 15, in welchem die Basis (1) geeignet ist, um an das Startmodul (12) über die besagte vereinfachte Funkverbindung einen Löschbefehl von mindestens einem Teil des Speichers (11) des Funkkommunikationsgeräts zu senden.

17. Funkkommunikationssystem nach einem der Ansprüche 13 bis 16, in welchem die Basis (1) geeignet ist, um an das Startmodul (12) eine Anfrage erbittend die Informationen über den Inhalt des Speichers (11) des Funkkommunikationsgeräts (3) zu senden,
und das Startmodul (12) geeignet ist, um nach dieser Anfrage die besagten Informationen zu suchen und über die besagte vereinfachte Funkverbindung eine Antwort zu senden, die diese Informationen gibt.

18. Funkkommunikationssystem nach einem der Ansprüche 13 bis 17, in welchem das Startmodul (12) geeignet ist, um an die Basis eine Information zur Integritätskontrolle des heruntergeladenen Updates zu senden, wobei die Basis geeignet ist, um erneut ein Download des besagten Updates an das Funkkommunikationsgerät (3) zu ordern, wenn die besagte Information zur Integritätskontrolle einen Integritätsfehler aufzeigt.

19. Funkkommunikationssystem nach Anspruch 18, in welchem die besagte Information zur Integritätskontrolle eine Signatur ist, berechnet anhand des besagten Updates, das im Speicher (11) des Funkkommunikationsgeräts (3) gespeichert wurde, wobei die Basis geeignet ist, um festzustellen, ob diese Signatur einen Integritätsfehler aufweist und um dann ein neues Download des Updates über die besagte vereinfachte Funkverbindung auszulösen.

20. Kommunikationsverfahren, das mindestens ein Kommunikationsgerät einsetzt, umfassend mindestens einen Speicher (11), der ein Softwaremodul zum Starten (12) und ein Softwaremodul zur Benutzung (13) enthält, mindestens eine elektronische Verarbeitungseinheit (9), die mit dem Speicher (11) verbunden ist, und mindestens eine Funkschaltung (10), die durch die Verarbeitungseinheit (9) gesteuert wird, wobei das besagte Verfahren die folgenden Schritte umfasst:
- Ausführung des Startmoduls (12) in der Verarbeitungseinheit im Downloadmodus, wobei der Downloadmodus umfasst:
• Herstellen einer vereinfachten Funkverbindung des Funkkommunikationsgeräts (3) mit einem Funkkommunikationsnetzwerk durch das besagte Startmodul, wobei die besagte Funkverbindung insofern vereinfacht ist, dass sie ausschließlich einen Download-Dienst unter Ausschluss eines anderen Telefonie-Dienstes ermöglicht, wobei die besagte vereinfachte Funkverbindung ermöglicht wird durch die Umsetzung von beschränkten Funktionalitäten, die verbunden sind mit der Implementierung der folgenden Schichten des Bluetooth-Protokolls:
- die als "LC" bezeichnete Schicht (Echtzeitregelung des Funklinks: beschränkt auf die einfache Multiplexierung der Daten für die Schaffung von Verbindungen;
- die als "LM" bezeichnete Schicht (Echtzeitregelung des Funklinks): beschränkt auf eine eingeschränkte Verhandlung auf die eingehenden Verbindungen, ohne Audio, ohne Authentifizierung noch Verschlüsselung;
- die als "L2CAP" bezeichnete Schicht: auf einen Einzeldienst beschränkte Regelung, Signalisierung und Multiplexierung;
- die Diensteschicht: Download-Dienst,
• Download eines Updates des Benutzermoduls (13) über die besagte vereinfachte Funkverbindung,
• Speicherung des besagten Updates im Speicher (11) des Funkkommunikationsgeräts,
• Empfang eines Umschaltbefehls im normalen Betriebsmodus des besagten Startmoduls (12),
• Trennung der besagten vereinfachten Funkverbindung bei Beendigung des besagten Downloads,
- Ausführung des besagten Startmoduls (12) im normalen Betriebsmodus, wobei der normale Betriebsmodus ein Laden des upgedateten Benutzermoduls durch die Herstellung einer normalen Funkverbindung des Funkkommunikationsgeräts (3) mit dem Funkkommunikationsnetzwerk umfasst, wobei die besagte Funkverbindung insofern normal ist, dass sie mindestens einen Telefonie-Dienst ermöglicht.

## Claims

1. Radiocommunication device (3) comprising:
- at least one memory (11) containing a starter software module (12) and a use software module (13),
- at least one electronic processing unit (9) linked to the memory (11),
- at least one radio circuit (10) controlled by the processing unit (9), said processing unit comprising means for:
- executing said starter module (12) in download mode, the starter module (12) comprising means for:
• setting up a simplified radio link of the radiocommunication device (3) with a radiocommunication network by said starter module (12), said radio link being simplified in that it enables only a downloading service to the exclusion of another telephony service, said simplified radio link being permitted by the implementation of limited functions associated with the implementation of the following layers of the Bluetooth protocol:
- the 'LC' layer (real time control of the radio link): limited to the simple multiplexing of data for the creation of connections,
- the 'LM' layer (real time control of the radio link): limited to a negotiation restricted to the incoming connections, without audio, without authentication or encryption,
- the 'L2CAP' layer: control, signalling and multiplexing limited to a single service,
- the service layer: downloading service,
• download an update of the use module (13) via said simplified radio link,
• store said update in the memory (11) of the radiocommunication device,
• receive an instruction for switching to normal operation mode of said starter module (12),
• disconnect said simplified radio link at the end of said download, said processing unit further comprising means for executing said starter module (12) in normal operation mode, the normal operation mode comprising means to load the use module (13) updated to set up a normal radio link of the radiocommunication device (3) with the radiocommunication network, said radio link being normal in that it enables at least one telephony service.

2. Radiocommunication device according to claim 1, wherein the starter module (12) is suitable to store the update in the place of at least one part of the use module initially contained in the memory (11).

3. Radiocommunication device according to any of claims 1 to 2, wherein the starter module is suitable to receive and recognise instructions via said simplified radio link.

4. Radiocommunication device according to claim 3, wherein the starter module (12) is suitable to receive by said simplified radio link, a write instruction in the memory to store said update in the memory (11).

5. Radiocommunication device according to any one of claims 3 and 4, wherein the starter module (12) is suitable to receive by said simplified radio link, an erase instruction of at least one part of the memory (11).

6. Radiocommunication device according to any one of the aforementioned claims, wherein the memory (11) of the radiocommunication device includes a flash memory containing the use module (13).

7. Radiocommunication device according to any one of the aforementioned claims, wherein the starter module (12) is suitable to:
- receive by said simplified radio link, a consultation requesting information on the content of the memory (11),
- look for said information and emit by said simplified radio link, a response giving this information.

8. Radiocommunication device according to any one of the aforementioned claims, wherein the starter module (12) is suitable to check the integrity of the downloaded update.

9. Radiocommunication device according to any one of the aforementioned claims, wherein the downloading mode enabling the download of an update of the use module does not drive the immediate execution of the use module (13), said starter module (12) being suitable to receive by said simplified radio link, an instruction for switching to normal operation mode.

10. Radiocommunication device according to any one of the aforementioned claims, wherein the use module (13) is suitable to give the starter module (12) an instruction for switching to normal operation mode.

11. Radiocommunication device according to any one of the aforementioned claims, constituting a wireless telephone (3).

12. Radiocommunication system comprising a radiocommunication device (3) according to any one of the aforementioned claims and at least one radiocommunication base (1) forming a local network with said radiocommunication device and communicating with it according to said radiocommunication protocol.

13. Radiocommunication system according to claim 12, wherein the base (1) is suitable to send instructions to the starter module (12) by said simplified radio link.

14. Radiocommunication system according to claim 13, wherein the base (1) is suitable to send the starter module (12) by said simplified radio link, a write instruction to the memory of the radiocommunication device to store said update in the memory.

15. Radiocommunication system according to claim 14, wherein the base (1) is suitable to store said update at least partially in place of the pre-existing versions of the use module (13).

16. Radiocommunication system according to any one of claims 13 to 15, wherein base (1) is suitable to send the starter module (12) by said simplified radio link, an erase instruction of at least one part of the memory (11) of the radiocommunication device.

17. Radiocommunication system according to any one of claims 13 to 16, wherein the base (1) is suitable to send to the starter module (12), a consultation requesting information on the content of the memory (11) of the radiocommunication device (3), and the starter module (12) is suitable to, following this consultation, search for said information and send by said simplified radio link, a response giving this information.

18. Radiocommunication system according to any one of claims 13 to 17, wherein the starter module (12) is suitable to send the base an integrity check information of the update downloaded, the base being suitable to control a download of said update to the radiocommunication device (3) again if said integrity check information reveals an integrity fault.

19. Radiocommunication system according to claim 18, wherein said integrity check information is a signature calculated from said update stored in the memory (11) of the radiocommunication device (3), the base being suitable to determine whether this signature reveals an integrity fault and to then trigger a new download of the update by said simplified radio link.

20. Communication method implementing at least one communication device comprising at least one memory (11) containing a starter software module (12) and a use software module (13), at least one electronic processing unit (9) linked to the memory (11) and at least one radio circuit (10) controlled by the processing unit (9), said method comprising the steps of:
- executing the starter module (12) in the processing unit in downloading mode, the downloading mode comprising:
• set up of a simplified radio link of the radiocommunication device (3) with a radiocommunication network by said starter module, said radio link being simplified in that it enables only a downloading service to the exclusion of another telephony service, said simplified radio link being permitted by the implementation of limited functions associated with the implementation of the following layers of the Bluetooth protocol:
- the 'LC' layer (real time control of the radio link): limited to the simple multiplexing of data for the creation of connections,
- the 'LM' layer (real time control of the radio link): limited to a negotiation restricted to the incoming connections, without audio, without authentication or encryption,
- the 'L2CAP' layer: control, signalling and multiplexing limited to a single service,
- the service layer: downloading service,
• download of an update of the use module (13) via said simplified radio link,
• storage of said update in the memory (11) of the radiocommunication device,
• reception of an instruction for switching to normal operation mode of said starter module (12),
• disconnection of said simplified radio link at the end of said download, execution of said starter module (12) in normal operation mode, the normal operation mode comprising a loading of the use module updated to set up a normal radio link of the radiocommunication device (3) with said radiocommunication network, said radio link being normal in that it enables at least one telephony service.
